# EUROPEAN PATENT APPLICATION

(11) **EP 3 151 479 A1**
(43) Date of publication of application: **05.04.2017**
(21) Application number: 14875891.5
(22) Date of filing: 02.09.2014
(51) Int. Cl.: H04L 12/58, H04M 1/725, H04W 4/12

(54) **MESSAGE PUSHING PROCESSING METHOD AND SYSTEM BASED ON MOBILE TERMINAL AND MOBILE TERMINAL**

(30) Priority: 28.05.2014 CN 201410230203
(71) Applicant: Huizhou TCL Mobile Communication Co., Ltd., Huizhou, Guangdong 516006 (CN)
(72) Inventor: WU, Huimin, HuiZhou, Guangdong 516006 (CN); YANG, Yan, HuiZhou, Guangdong 516006 (CN)
(74) Representative: Petraz, Gilberto Luigi
(86) International application number: PCT/CN2014/085754
(87) International publication number: WO 2015/180282

(57) **Abstract**

A message push processing method and a system based on a mobile terminal, and the mobile terminal are provided. Pushed messages are classified into different kinds according to different effects thereof. Different time periods are set to push the different kinds of the pushed messages. All kinds of pushed messages are received but a preview is not shown on a screen when a specified application is executed, and the preview of the pushed messages is recovered, when the specified application is exited. The present invention provides convenience for users by setting classification of the pushed messages and blocking the same.

## Description

### BACKGROUND OF THE INVENTION

### 1. Field of the Invention

The present invention relates to a field of mobile terminal technology, and more specifically to a message push processing method and a system based on a mobile terminal, and the mobile terminal.

### 2. Description of the Prior Art

With the development of mobile terminal technology and the continuous improvement of people's living standards, all kinds of mobile terminals, such as a mobile phone, are increasingly popular, the mobile phone has become an indispensable communication tool in people's lives.

Now human life comes with increasingly heavy work pressure, overloaded work tasks, and deteriorated living environments. Therefore, more and more people choose a memo in the mobile phone for reminders. However, too many applications have opened its message pushing service, and the disorganized pushed message has brought a lot of trouble to the user.

For example, in the process of playing games or watching videos, all kinds of meeting reminder messages may be pushed at any time. Although these messages may only be pushed to the top of the screen for a few seconds, the following wrong operation risk and shadows on parts of the game or video view will no doubt greatly reduce the user's satisfaction, and bring inconvenience to the user.

Therefore, the current technology still needs to be improved and developed.

### SUMMARY OF THE INVENTION

To overcome the above-mentioned disadvantages, the present invention provides a message push processing method and a system based on a mobile terminal, and the mobile terminal. The present invention aims to classify and block the pushed message by settings in the system, for the user's convenience.

The technical schemes of the present invention are illustrated hereunder:

A message push processing method based on a mobile terminal, comprising:
classifying in advance pushed messages into different kinds according to different effects thereof on the mobile terminal;
setting different time periods to push the different kinds of the pushed messages, and setting to block all the pushed messages when a specified application is executed, which specifically comprising: presetting to block all the pushed messages when a certain game application and/or a video application is executed, the pushed messages are only received in a background but not showing a preview on a top of the screen;
receiving the different kinds of the pushed messages according to the different time periods by the mobile terminal, and determining whether the specified application is executed or not;
blocking all the pushed messages, and controlling to receive normally every kind of messages, but not showing a preview on a top of the screen, when it is determined that the specified application is executed;
controlling to recover the preview of all the pushed messages normally, when the specified application is exited.

Preferably, in the message push processing method based on the mobile terminal, the step of classifying in advance pushed messages into different kinds according to different effects thereof on the mobile terminal comprises:
classifying the pushed messages according to different effects thereof into a work pushed message, a living pushed message, and an emergency pushed message;
defining a meeting and/or contacting customer related pushed message as the work pushed message, defining a shopping, partying with friends and/or cleaning related pushed message as the living pushed message, and defining an emergency activities related pushed message as the emergency pushed message.

Preferably, in the message push processing method based on the mobile terminal, the step of setting different time periods to push the different kinds of pushed messages further comprises:
setting a time period from 8:00 AM to 7:00 PM for pushing the work pushed message, and setting to block the work pushed message beyond this time period;
setting a time period from 6:00 AM to 8:00 AM, and from 6:00 PM to 10:00 PM for pushing the living pushed message;
defining a notice having contents about sudden occurrence of a family member as the emergency pushed message, and setting a time period for pushing the same as a whole day.

The technical schemes of the present invention are illustrated hereunder:

A message push processing method based on a mobile terminal, comprising:
A, classifying in advance pushed messages into different kinds, according to different effects thereof on the mobile terminal;
B, setting different time periods to push the different kinds of the pushed messages, and setting to block all the pushed messages when a specified application is executed;
C, receiving the different kinds of pushed messages according to the different time periods by the mobile terminal, and determining whether the specified application is executed or not;
D, blocking all the pushed messages, when it is determined that the specified application is executed.

In the message push processing method based on the mobile terminal, the step D further comprises:
blocking all the pushed messages, which means controlling to receive normally every kind of messages, but not showing a preview on a top of the screen, when it is determined the that specified application is executed; and
controlling to recover the preview of all the pushed messages normally, when the specified application is exited.

In the message push processing method based on the mobile terminal, the step A further comprises:
classifying the pushed messages according to different effects thereof into a work pushed message, a living pushed message, and an emergency pushed message;
defining a meeting and/or contacting customer related pushed message as the work pushed message, defining a shopping, partying with friends and/or cleaning related pushed message as the living pushed message, and defining an emergency activities related pushed message as the emergency pushed message.

In the message push processing method based on the mobile terminal, the step B further comprises:
setting a time period from 8:00 AM to 7:00 PM for pushing the work pushed message, and setting to block the work pushed message beyond this time period;
setting a time period from 6:00 AM to 8:00 AM, and from 6:00 PM to 10:00 PM for pushing the living pushed message;
defining a notice having contents about sudden occurrence of a family member as the emergency pushed message, and setting a time period for pushing the same as a whole day.

In the message push processing method based on the mobile terminal, the step B of blocking all the pushed messages, when it is determined that the specified application is executed further comprises:
presetting to block all the pushed messages when a certain game application and/or a video application is executed, the pushed message are only received in a background but not showing a preview on a screen.

A message push processing system based on a mobile terminal, comprising:
a message classifying automatic processing module, for classifying in advance pushed messages into different kinds according to different effects thereof on the mobile terminal;
a presetting module, for presetting different time periods to push the different kinds of the pushed messages, and setting to block all the pushed messages when a specified application is executed;
a section receiving and determining module, for controlling the mobile terminal to receive the different kinds of the pushed messages according to the different time periods, and determining whether the specified application is executed or not;
a blocking processing module, for blocking all the pushed messages, and controlling to receive normally every kind of messages, but not showing a preview on a top of the screen, when it is determined that the specified application is executed;
a recovery processing module, for controlling to recover the preview of all the pushed messages normally, when the specified application is exited.

In the message push processing system based on the mobile terminal, the message classifying automatic processing module comprises:
a classifying unit, for classifying the pushed messages according to different effects thereof into a work pushed message, a living pushed message, and an emergency pushed message;
a detail defining unit, for defining a meeting and/or contacting customer related pushed message as the work pushed message, defining a shopping, partying with friends and/or cleaning related pushed message as the living pushed message, and defining an emergency activities related pushed message as the emergency pushed message.

In the message push processing system based on the mobile terminal, the presetting module further comprises:
a first setting unit, for setting a time period from 8:00 AM to 7:00 PM for pushing the work pushed message, and setting to block the work pushed message beyond this time period;
a second setting unit, for setting a time period from 6:00 AM to 8:00 AM, and from 6:00 PM to 10:00 PM for pushing the living pushed message;
a third setting unit, for defining a notice having contents with about sudden occurrence of a family member as the emergency pushed message, and setting a time period for pushing as a whole day.

In the message push processing system based on the mobile terminal, the presetting module further comprises:
a block setting unit, for presetting to block all the pushed messages when a certain game application and/or a video application is executed, the pushed messages are and only received in a background but not showing a preview on a screen.

A mobile terminal, comprising a message push processing system based on the mobile terminal as claimed above.

The present invention provides a message push processing method a system based on a mobile terminal, and the mobile terminal, to add a new function for the mobile terminal: function of pushing messages in different time periods and blocking the pushed messages when a specified application is executed. The present invention can define the executed application and the pushed message which will be temporarily blocked to be previewed, and when specified application (such as Sohu video) is executed, the message center closes the preview of all messages. At this time, the mobile terminal can still receive the pushed messages, they only do not show on a top of the screen. When user closes the specified application, the message center recovers the preview normally, which is greatly convenient for the user.

### BRIEF DESCRIPTION OF THE DRAWINGS

FIG. 1 is a flow chart showing a message push processing method based on a mobile terminal according to a preferred embodiment of the present invention; and
FIG. 2 is a principle block diagram of a message push processing system based on a mobile terminal according to the present invention.

### DETAILED DESCRIPTION OF THE PREFERRED EMBODIMENTS

The present invention provides a message push processing method based on a mobile terminal, mainly comprising: classifying in advance pushed messages into different kinds, according to different effects thereof on the mobile terminal; and setting different time periods to push the different kinds of the pushed messages, and setting to block all the pushed messages when a specified application is executed; receiving the different kinds of the pushed messages according to the different time periods by the mobile terminal, and determining whether the specified application is executed or not; blocking all the pushed messages, when it is determined that the specified application is executed.

For the purpose of illustrating the present invention, technical schemes, and the effects more clearly, further details of the present invention are provided below. It should be understood that the preferred embodiment described herein is only to explain the present invention, and is not used to limit the present invention.

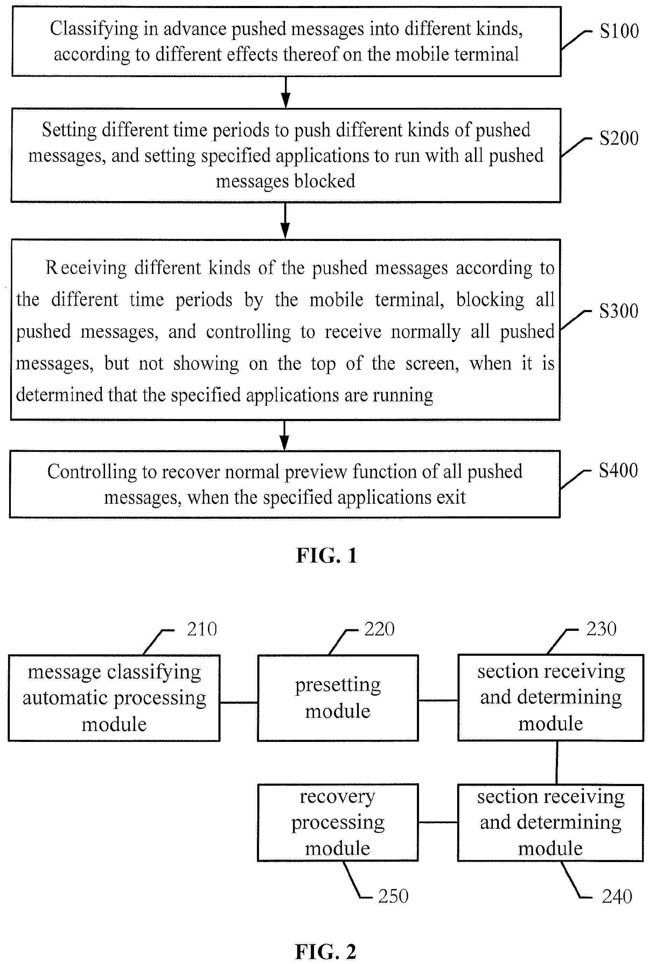

Please refer to FIG. 1, which is a flow chart showing a message push processing method based on a mobile terminal according to a preferred embodiment of a present invention. The message push processing method based on a mobile terminal as shown in FIG. 1 comprises the following steps:

S100, classifying in advance pushed messages into different kinds, according to different effects thereof on the mobile terminal.

In a preferred embodiment, here requires classifying the pushed messages according to different effects thereof into a work pushed message, a living pushed message, and an emergency pushed message.

For example: defining a meeting and/or contacting customer related pushed message as the work pushed message, defining a shopping, partying with friends and/or cleaning related pushed message as the living pushed message, and defining an emergency activities related pushed message as the emergency pushed message.

S200, setting different time periods to push the different kinds of pushed messages, and setting to block all the pushed messages when a specified application is executed.

In a preferred embodiment, setting different time periods to push the different kinds of the pushed messages, and classifying the pushed messages according to different effects into the work pushed message, the living pushed message, and the emergency pushed message. The work pushed message, the living pushed message, and the emergency pushed message have their receiving time periods defined according to the user's different living habits.

For example: setting a time period from 8:00 AM to 7:00 PM for pushing the work pushed message, and setting to block the work pushed message beyond this time period; setting a time period from 6:00 AM to 8:00 AM, and from 6:00 PM to 10:00 PM for pushing the living pushed message; defining a notice having contents about sudden occurrence of a family member as the emergency pushed messages, and setting a time period for pushing as a whole day.

Certainly, if some users go to work at night, the time period to push the work pushed message may be defined to be at night, and so on; the details can be set according to the requirement of the user.

The preset invention presets to block all the pushed messages when a certain game application and/or a video application is executed, the pushed messages are only received in a background but not showing a preview on a screen.

S300, receiving the different kinds of the pushed messages according to the different time periods by the mobile terminal, blocking all the pushed messages, and controlling to receive normally every kind of messages, but not showing a preview on a top of the screen, when it is determined that the specified application is executed.

For example, as mentioned above, in a time period from 8:00 AM to 7:00 PM, the mobile terminal phone receives the meeting and/or contacting customer related pushed messages. In a time period from 6:00 AM to 8:00 AM, and from 6:00 PM to 10:00 PM, the living pushed messages are received in the gap among the working time in order to achieve a balance of work and life.

The emergency pushed messages may be received during a whole day, and the content is limited about sudden occurrence of a family member.

When the users start a game application or a video application, all the pushed messages will be blocked, to avoid influencing the users. In the preferred embodiment, all the pushed messages will be blocked, here meaning only controlling to receive normally every kind of messages, but not showing a preview on a top of a screen.

S400, controlling to recover the preview of all the pushed messages normally, when the specified application is exited.

When the user closes the game application or the video application, all the pushed messages are controlled to be previewed normally.

In the preferred embodiment, the users may define the executed application and pushed messages which should be blocked to be previewed, and when the defined application (such as Sohu Video) is executed, the message center will close the preview function for the pushed messages. At this time, the mobile terminal can still receive the messages, but they are not shown on the screen. When the users close the specified applications, the message center will recover the preview normally. After classification, the interface is clear and concise, and different messages will be pushed orderly according to different time periods, with a clear goal.

As mentioned above, the present invention provides a message push processing method based on a mobile terminal, by classifying and blocking the pushed messages to recognize specified applications, such as games or videos, and temporarily automatically shut down the SMS (short message service), WeChat, and other pushing preview functions from a third-party software, and provide convenience for the user.

As mentioned in the preferred embodiment, the present invention also provides a message push processing system based on a mobile terminal. As shown in FIG. 2, the system comprises:

A message classifying automatic processing module 210, is for classifying in advance pushed messages into different kinds, according to different effects thereof on the mobile terminal. The details are as mentioned above.

A presetting module 220, is for presetting different time periods to push the different kinds of the pushed messages, and setting to block all the pushed messages when a specified application is executed. The details are as mentioned above.

A section receiving and determining module 230, is for controlling the mobile terminal to receive the different kinds of the pushed messages according to the different time periods, and determining whether the specified application is executed or not. The details are as mentioned above.

A blocking processing module 240, is for blocking all the pushed messages, and controlling to receive normally every kind of messages, but not showing a preview on the top of the screen when it is determined that the specified application is executed. The details are as mentioned above.

A recovery processing module 250, is for controlling to recover the preview of all the pushed messages normally, when the specified application is exited. The details are as mentioned above.

In the message push processing system based on a mobile terminal, the message classifying automatic processing module 210 comprises:

A classifying unit is for classifying the pushed messages according to different effects thereof into a work pushed message, a living pushed message, and an emergency pushed message. The details are as mentioned above.

A detail defining unit is for defining a meeting and/or contacting customer related pushed message as the work pushed message, defining a shopping, partying with friends and/or cleaning related pushed message as the living pushed message, and defining an emergency activities related pushed message as the emergency pushed message. The details are as mentioned above.

In the message push processing system based on a mobile terminal, wherein the presetting module further comprises:

A first setting unit is for setting time period from 8:00 AM to 7:00 PM for pushing the work pushed message, and setting to block the work pushed message beyond this time period. The details are as mentioned above.

A second setting unit is for setting a time period from 6:00 AM to 8:00 AM, and 6:00 PM to 10:00 PM or pushing the living pushed message. The details are as mentioned above.

A third setting unit is for defining a notice having contents about sudden occurrence of a family member as the emergency pushed message, and setting a time period for pushing the same as a whole day. The details are as mentioned above.

In the message push processing system based on a mobile terminal, wherein the presetting module 220 further comprises:

A block setting unit is for presetting to block all the pushed messages when a certain game application and/or a video application is executed, the pushed messages are only received in a background but not showing a preview on a screen. The details are as mentioned above.

As mentioned in the above embodiment, the present invention also provides a preferred embodiment of a mobile terminal. The mobile terminal comprises the message push processing system based on a mobile terminal as mentioned.

In conclusion, the present invention provides a message push processing method and a system based on a mobile terminal, and the mobile terminal, to add a new function for the mobile terminal: function of pushed messages in different time periods and blocking the pushed messages when a certain specified application is executed. The present invention can define the executed application and the pushed messages which will be temporarily blocked to be previewed, and when specified applications(such as Sohu video) is executed, the message center closes the preview function of all messages. At this time, the mobile terminal can still receive the pushed messages, only they do not show on the top of the screen. When the user closes the specified application, the message center recovers the preview normally, which is greatly convenient for the user.

It should be understood that the present invention has been described with reference to certain preferred and alternative embodiments which are intended to be exemplary only and do not limit the full scope of the present invention as set forth in the appended claims.

## Claims

1. A message push processing method based on a mobile terminal, comprising:
classifying in advance pushed messages into different kinds according to different effects thereof on the mobile terminal;
setting different time periods to push the different kinds of the pushed messages, and setting to block all the pushed messages when a specified application is executed, which specifically comprising: presetting to block all the pushed messages when a certain game application and/or a video application is executed, the pushed messages are only received in a background but not showing a preview on a screen;
receiving the different kinds of the pushed messages according to the different time periods by the mobile terminal, and determining whether the specified application is executed or not;
blocking all the pushed messages, and controlling to receive normally every kind of messages, but not showing a preview on a top of the screen, when it is determined that the specified application is executed;
controlling to recover the preview of all the pushed messages normally, when the specified application is exited.

2. The message push processing method based on the mobile terminal as claimed in claim 1, wherein the step of classifying in advance the pushed messages into different kinds according to different effects thereof on the mobile terminal comprises:
classifying the pushed messages according to different effects thereof into a work pushed message, a living pushed message, and an emergency pushed message;
defining a meeting and/or contacting customer related pushed message as the work pushed message, defining a shopping, partying with friends and/or cleaning related pushed message as the living pushed message, and defining an emergency activities related pushed message as the emergency pushed message.

3. The message push processing method based on the mobile terminal as claimed in claim 2, wherein the step of setting different time periods to push the different kinds of the pushed messages further comprises:
setting a time period from 8:00AM to 7:00PM for pushing the work pushed message, and setting to block the work pushed message beyond this time period;
setting a time period from 6:00 AM to 8:00 AM, and from 6:00 PM to 10:00 PM for pushing the living pushed message; and
defining a notice having contents about sudden occurrence of a family member as the emergency pushed message, and setting a time period for pushing the same as a whole day.

4. A message push processing method based on a mobile terminal, comprising:
classifying in advance pushed messages into different kinds, according to different effects thereof on the mobile terminal;
setting different time periods to push the different kinds of the pushed messages, and setting to block all the pushed messages when a specified application is executed;
receiving the different kinds of the pushed messages according to the different time periods by the mobile terminal, and determining whether the specified application is executed or not;
blocking all the pushed messages, when it is determined that the specified application is executed.

5. The message push processing method based on the mobile terminal as claimed in claim 4, wherein the step of blocking all the pushed messages when it is determined that the specified application is executed further comprises:
blocking all the pushed messages, and controlling to receive normally every kind of messages, but not showing a preview on a top of the screen, when it is determined that the specified application is executed; and
controlling to recover the preview of all the pushed messages normally, when the specified application is exited.

6. The message push processing method based on the mobile terminal as claimed in claim 4, wherein the step of classifying in advance pushed messages into different kinds according to different effects thereof on the mobile terminal further comprises:
classifying the pushed messages according to different effects thereof into a work pushed message, a living pushed message, and an emergency pushed message;
defining a meeting and/or contacting customer related pushed message as the work pushed message, defining a shopping, partying with friends and/or cleaning related pushed message as the living pushed message, and defining an emergency activities related pushed message as the emergency pushed message.

7. The message push processing method based on the mobile terminal as claimed in claim 6, wherein the step of setting different time periods to push the different kinds of the pushed messages further comprises:
setting a time period from 8:00 AM to 7:00 PM for pushing the work pushed message, and setting to block the work pushed message beyond this time period;
setting a time period from 6:00 AM to 8:00 AM, and from 6:00 PM to 10:00 PM for pushing the living pushed message;
defining a notice having contents about sudden occurrence of a family member as the emergency pushed message, and setting a time period for pushing the same as a whole day.

8. The message push processing method based on the mobile terminal as claimed in claim 4, wherein the step of blocking all the pushed messages, when it is determined that the specified application is executed further comprises:
presetting to block all the pushed messages when a certain game application and/or a video application is executed, the pushed messages are only received in a background but not showing the preview on the screen.

9. A message push processing system based on a mobile terminal, comprising:
a message classifying automatic processing module, for classifying in advance pushed messages into different kinds, according to different effects thereof on the mobile terminal;
a presetting module, for presetting different time periods to push the different kinds of the pushed messages, and setting to block all the pushed messages when a specified application is executed;
a section receiving and determining module, for controlling the mobile terminal to receive the different kinds of the pushed messages according to the different time periods, and determining whether the specified application is executed or not;
a blocking processing module, for blocking all the pushed messages, and controlling to receive normally every kind of messages, but not showing a preview on a top of a screen, when it is determined that the specified application is executed;
a recovery processing module, for controlling to recover the preview of all the pushed messages normally, when the specified application is exited.

10. The message push processing system based on the mobile terminal as claimed in claim 9, wherein the message classifying automatic processing module comprises:
a classifying unit, for classifying the pushed messages according to different effects thereof into a work pushed message, a living pushed message, and an emergency pushed message;
a detail defining unit, for defining a meeting and/or contacting customer related pushed message as the work pushed message, defining a shopping, partying with friends and/or cleaning related pushed message as the living pushed message, and defining an emergency activities related pushed message as the emergency pushed message.

11. The message push processing system based on the mobile terminal as claimed in claim 9, wherein the presetting module further comprises:
a first setting unit, for a setting time period from 8:00 AM to 7:00 PM for pushing the work pushed message, and setting to block the work pushed message beyond this time period;
a second setting unit, for setting a time period from 6:00 AM to 8:00 AM, and from 6:00 PM to 10:00 PM for pushing the living pushed message;
a third setting unit, for defining a notice having contents about sudden occurrence of a family member as the emergency pushed message, and setting a time period for pushing the same as a whole day.

12. The message push processing system based on the mobile terminal as claimed in claim 9, wherein the presetting module further comprises:
a block setting unit, for presetting to block all the pushed messages when a certain game application and/or a video application is executed, and the pushed messages are only received in a background but not showing on the screen.

13. A mobile terminal, comprising a message push processing system based on the mobile terminal as claimed in claim 9.
